# EUROPÄISCHE PATENTANMELDUNG

(11) **EP 1 112 801 A2**
(43) Veröffentlichungstag der Anmeldung: **04.07.2001**
(21) Anmeldenummer: 00811239.3
(22) Anmeldetag: 22.12.2000
(51) Int. Cl.: B23K 26/00

(54) **Verfahren zur Kontinuierlichen Uberwachung des Pulvermengenauftrags auf der Schweissnaht von Dosenrümpfen sowie eine Vorrichtung zur Durchführung des Verfahrens**

(30) Priorität: 30.12.1999 CH 240199
(71) Anmelder: Frei AG, 9303 Wittenbach (CH)
(72) Erfinder: Steiger, Walo, 9042 Speicher (CH)
(74) Vertreter: Gachnang, Hans Rudolf

(57) **Zusammenfassung**

Die auf dem Schweissnahtbereich (19) von Dosenrümpfen (5) aufgetragene Pulverschicht wird mit einem Lichtstrahl (39) von einer ausserhalb der Dosenrümpfe (5) angeordneten Lichtquelle (37) angestrahlt und das zur Lichtquelle (37) zurück reflektierte Licht als Mass für die aufgetragene Menge des Pulvers ausgewertet.

## Beschreibung

Gegenstand der Erfindung ist ein Verfahren zur kontinuierlichen Überwachung des Pulvermengenauftrags gemäss Oberbegriffs des Patentanspruchs 1. Gegenstand der Erfindung ist weiter eine Vorrichtung zur Durchführung des Verfahrens gemäss Patentanspruch 8.

Dosenrümpfe aus Metall für Konserven und Getränke werden heute entweder durch Tiefziehen/Abstrecken oder durch einen Schweissvorgang hergestellt. Bei letzterem liegen aussen und innen am Mantel des Dosenrumpfes gegen Korrosion ungeschützte Schweissnaht-Materialbereiche vor. Diese müssen einerseits zur Verhinderung von Kontamination des Füllgutes der Dose und andererseits zum Schutz der Dose gegen Korrosion durch das Füllgut mit einem Korrosionsschutzlack beschichtet werden. Die Beschichtung des Nahtbereiches erfolgt entweder durch Nasslacke oder auf elektrostatischem Wege durch eine Beschichtung mit Pulverlack. Diese Beschichtungsverfahren sind seit langem bekannt und ermöglichen eine einwandfreie, streifenförmige Abdeckung des Schweissnahtbereichs. Bei der Verarbeitung von Pulverlacken beeinflussen eine Anzahl von Parametern einen über grössere Zeitabstände, d.h. über eine Vielzahl von Dosen gleichbleibenden, kontinuierlichen Pulverauftrag. Es sind dies pulverseitig u.a. die chemische Zusammensetzung und Körnung des Pulvers und applikationsseitig die elektrostatische Aufladung des Pulvers und der kontinuierliche Pulverfluss, der wiederum von verschiedenen Parametern direkt und indirekt beeinflusst wird. Solche Einflussgrössen sind beispielsweise die Luftfeuchtigkeit und die Temperatur im Applikationsbereich und die geometrische Gestalt der Pulverzuleitungen (Durchmesser, Länge, Material). Diese in keinem mathematisch exakt messbaren Verhältnis zueinander stehenden Parameter sind die Ursache, dass beim Auftragen des Pulvers auf die Schweissnähte der Dosenrümpfe nicht von fest einstellbaren Grössen an der Pulverapplikationsanlage ausgegangen werden kann, sondern anfänglich nur näherungsweise eine Einstellung erfolgt, die dann vom Bedienungsmann mit Erfahrung nachträglich einjustiert werden muss. Aber auch eine einmal optimal eingestellte Applikationsanlage ist nicht in der Lage über Stunden oder gar Tage ohne Nachjustierung betrieben zu werden, da die eingangs genannten Umweltparameter nicht konstant bleiben. Insbesondere ändern sich durch den Betrieb der Anlage auch die Parameter der Pulverkörnung, denn durch Rezyklieren des aus dem Applikationskreislauf zurückgewonnenen und wiederverwendbaren Pulvers ändert sich die Zusammensetzung des Kornspektrums und dadurch unter anderem dessen elektrische Aufladbarkeit. Dies verursacht ein Driften der Menge des schlussendlich an der Dose haftenden Pulvers. Unterschreitet diese einen gewissen Betrag, genügt die Schichtdicke nicht mehr und der Korrosionsschutz ist nicht mehr gewährleistet. Der Doseninhalt kann als Folge davon kontaminiert werden und verderben.

Es sind bereits verschiedene Verfahren und Vorrichtungen auf dem Markt, mit denen die zur Applikationsanlage geförderte Pulvermenge überwacht werden kann. Bei den bekannten Verfahren wird die geförderte Pulvermenge überwacht, jedoch nicht die aufgetragene Pulvermenge ermittelt. Es ist daher nicht möglich, mit diesen Verfahren die effektiv aufgetragene Pulvermenge und damit die Schichtdicke zu überprüfen. Es sind weiter Vorrichtungen bekannt, bei denen mittels im Innern der Applikationsanlage liegenden Sensoren versucht wird, die aufgetragene Pulvermenge zu messen. Diese Vorrichtungen haben den Nachteil, dass sie einerseits Zuleitungen aufweisen, welche durch den Schweissarm hindurchgeführt werden müssen, in einem Bereich, in dem sehr wenig Raum für zusätzliche Leitungen vorhanden ist. Im weiteren kann bei Vorrichtungen, welche innerhalb des Sprühraums oder in dessen Nähe angeordnet sind, nicht vermieden werden, dass durch Ablagerungen von vagabundierenden elektrostatisch aufgeladenen Pulverpartikeln die Messsonde innert kürzester Zeit verschmutzt und keine verwertbaren Resultate mehr liefern kann.

Aufgabe der Erfindung ist die Schaffung eines Verfahrens mit welchem die aufgetragene Sollwert-Pulvermenge auf dem Schweissnahtbereich kontinuierlich überwacht werden kann. Eine weitere Aufgabe der Erfindung ist die Schaffung einer Vorrichtung zur Durchführung des Verfahrens.

Diese Aufgaben werden mit dem erfindungsgemässen Verfahren gemäss den Merkmalen des Patentanspruchs 1 sowie mit den Merkmalen der Vorrichtung des Patentanspruchs 8 gelöst.

Mit dem erfindungsgemässen Verfahren gelingt es, zuverlässige und aussagekräftige Werte über die aufgetragene Pulvermenge zu erhalten und zwar mit einer ausserhalb der Dosenrümpfe angeordneten Messeinrichtung. Die externe Lage der Messeinrichtung hat den Vorteil, dass keine Verschmutzung durch vagabundierende Pulverteilchen erfolgt und dass die elektrischen Leitungen zur Versorgung der Messeinrichtung nicht durch den Schweissarm geführt werden müssen, der in einem sehr starken Magnetfeld liegt, sondern ausserhalb angeordnet werden können, wo immer genügend Platz dazu vorhanden ist. Im weiteren lässt sich die Messvorrichtung ohne Eingriff in die Schweiss- und in die Applikationsanlage an der Dosenproduktionsanlage anbauen. Die Messvorrichtung kann an jeder Anlage, unabhängig von deren Hersteller eingesetzt werden. Die gleiche Vorrichtung kann für alle Dosen-Durchmesser-bereiche eingesetzt werden. Da kein Eingriff in die Steuerung der Schweiss- und der Applikationsanlage erforderlich ist, werden auch Garantiebestimmungen der Hersteller der Anlagen durch den nachträglichen Einbau der Mess- und Überwachungsvorrichtung nicht tangiert. Es können auch alte, seit Jahren in Betrieb stehende Anlagen nachträglich mit der Vorrichtung ausgerüstet werden. Die Vorrichtung ist kostengünstig herstellbar und die Investition macht sich innerhalb kurzer Zeit dank Verminderung von Ausschussdosen bezahlt.

Anhand eines illustrierten Ausführungbeispieles wird die Erfindung nun näher erläutert. Es zeigen
- Figur 1: eine schematische Schnitt-Darstellung einer Schweissstation und der anschliessenden Transportvorrichtung für die geschweissten Dosenrümpfe mit einer Überwachungsvorrichtung,

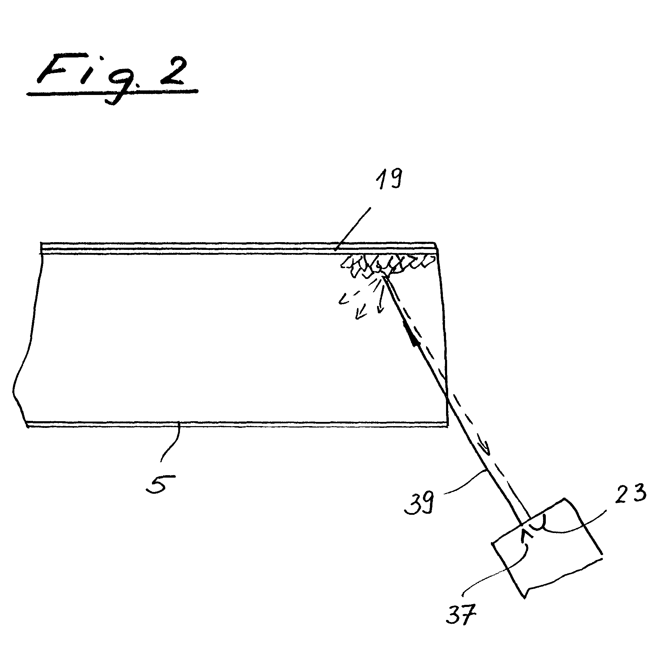

- Figur 2: eine schematische Darstellung der Funktionsweise der Reflektion der Lichtstrahlen an den Pulverkörnern auf der Schweissnaht.

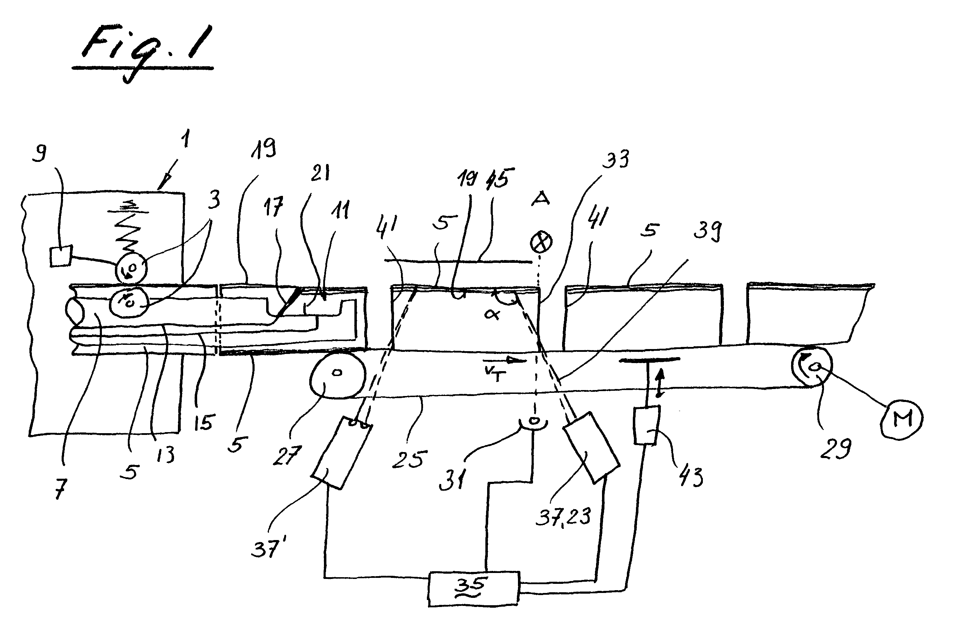

In Figur 1 ist auf der linken Bildseite das Ende einer Schweissmaschine 1 mit den beiden Schweisselektrodenrollen 3 sichtbar. Zwischen den beiden Schweissrollen 3 werden die Längskanten eines zu einem zylindrischen Dosenrumpf 5 gerundeten Blechzuschnitts in bekannter Weise durch eine Widerstands-Schweissung miteinander verbunden. Die untere Schweissrolle 3 ist am vorderen Ende eines Schweissarms 7 drehbar gelagert; die obere Schweissrolle ist federnd an der Schweissmaschine 1 befestigt und durch einen Antrieb mit einem Antrieb 9 antreibbar. Am Schweissarm 7 ist in Transportrichtung der Dosenrümpfe 5 ein Pulverapplikationsraum 11 ausgebildet, in den eine Pulverspeiseleitung 13 und eine Pulver-Rücksaugleitung 15 einmünden. Durch die Pulverspeiseleitung 13 wird ein Pulver-Luft-Gemisch 17 auf den Schweissnahtbereich 19 gesprüht. Die elektrostatische Aufladung des Pulvers kann durch eine mit einer Hochspannungsquelle verbundene Nadelspitze 21 erfolgen.

Die geschweissten Dosenrümpfe 5 werden von einem angetriebenen Transportband 25, welches um die beiden Transportrollen 27 und 29 umläuft, übernommen und infolge der höheren Transportgeschwindigkeit v_{T} des Transportbandes 25 gegenüber der Schweissgeschwindigkeit auseinandergezogen, d.h. der Abstand zwischen den einzelnen Dosenrümpfen 5, der beim Schweissen wenige Millimeter beträgt, kann durch diese Massnahme auf 10mm - 25mm, vorzugsweise 20mm bis 25mm vergrössert werden.

Mit einem Sensor 31, z.B. einer Lichtschranke, wird die Ankunft eines Dosenrumpfes 5 erfasst. Der Eintritt der Vorderkante 33 des Dosenrumpfes 5 in den Tastbereich des Sensors 31 bewirkt im Rechner 35 das Einschalten einer Lichtquelle 37, welche einen gebündelten Lichtstrahl 39 in einem Winkel alpha, der vom rechten Winkel abweicht, zwischen der Vorderkante 33 des ankommenden Dosenrumpfs 5 und der Hinterkante 41 des vorangegangenen Dosenrumpfes 5 hindurch auf den Schweissnahtbereich 19 aussendet. Alternativ kann der Lichtstrahl 39 auch dauernd eingeschaltet sein und mit dem Lichtsensor 23, der sich vorzugsweise neben der Lichtquelle 35 befindet, die An-bzw. Abwesenheit eines Dosenrumpfes 5 angezeigt werden. An den Pulverpartikeln, die auf dem Schweissnahtbereich 19 haften, wird ein Teil des ankommenden Lichtstrahls 39 reflektiert und vom Lichtsensor 23 neben der Lichtquelle 37 empfangen und zur Auswertung an den Rechner 35 weitergeleitet. Die Menge bzw. Intensität des vom Pulver reflektierten Lichts ist ein sehr genaues Mass für die Menge der auf dem Schweissnahtbereich 19 liegenden Pulverkörner und damit der Dicke der Pulverschicht. Dieser Wert wird im Rechner 35 ausgewertet und mit einem eingegebenen Sollwert oder Sollwertbereich verglichen. Liegt der gemessene Wert innerhalb von vorgebbaren Grenzen, so erfolgt kein Eingriff in die Produktion oder in die Pulvermengensteuerung an der Pulverapplikationsanlage (nicht dargestellt). Driftet hingegen der Wert des reflektierten Lichts aufgrund einer abweichenden Pulvermenge aus dem Sollwertbereich heraus, kann ein Alarmsignal ausgelöst werden, welches der Bedienungsperson die Abweichung akustisch oder optisch anzeigt. Bei einer Abweichung wegen einer zu grossen Pulvermenge muss die Anlage nicht abgestellt werden, da dadurch keine Verminderung der Qualität der Nahtabdeckung entsteht, sondern einzig höhere Pulverkosten durch Mehrverbrauch entstehen. Driftet allerdings der Wert nach unten, da zu wenig Pulver auf dem Nahtbereich 19 abgelagert worden ist, ist es notwendig, die Anlage anzuhalten, die Pulvermenge zu erhöhen oder die mit zu wenig Pulver beschichteten Dosenrümpfe 5 mit einer Auswerfvorrichtung 43 auszuwerfen. Eine programmierbare Logik im Rechner 35 bewirkt, dass nicht jeder Dosenrumpf 5, der wenig Pulver aufweist sofort ausgestossen wird, sondern das Auswerfen erst erfolgt, wenn der Fehler andauert oder wenn eine vom Rechner 35 veranlasste Erhöhung der Pulvermenge nicht erfolgreich in eine höhere Schichtdicke umgesetzt werden kann. Alternativ kann eine zu gering gemessene Pulvermenge auch optisch oder akustisch angezeigt werden, bevor ein Stop der Anlage erfolgt. Die Auswerfvorrichtung 43 ist schematisch als Stössel dargestellt; in der Praxis erfolgt das seitliche Ausstossen der nicht korrekt beschichteten Dosenrümpfe 5 durch einen Pressluftstrahl.

Die Anlage kann in ihrer einfachsten Ausgestaltung mit einer Lichtquelle 37 und einer Eintrittsschranke (Sensor 31) auskommen. Falls eine Überwachung der Pulvermenge auf dem Schweissnahtbereich 19 auch seitlich der Schweissnaht erfolgen soll, können einer oder mehrere weitere Lichtquellen 37 und Lichtsensoren 23 vorgesehen werden, welche entweder ebenfalls von vorne, jedoch in einem abweichenden Winkel ins Innere der Dosenrümpfe 5 leuchten, oder wie in Figur 1 dargestellt, durch das hintere Ende 41 die Pulvermenge detektieren.

Als Lichtquelle wird vorzugsweise ein Laser, insbesondere ein modifizierter Laser eingesetzt, der einen sehr stark gebündelten Lichtstrahl auf die Pulverschicht 19 sendet und ein entsprechend gebündeltes reflektiertes Lichtsignal erzeugt.

Die Lichtquelle 37 und der Lichtsensor 23 sind auf einem nicht dargestellten Support ausserhalb des Transportbereichs der Dosenrümpfe 5 angeordnet. Eine Platte 45 verhindert die schädliche Blendung der Bedienungsperson, falls ein Lichtstrahl 39 ausgesandt werden sollte, wenn kein Dosenrumpf 5 anwesend ist. Die Platte 45 kann ebenfalls am Support befestigt sein.

## Patentansprüche

1. Verfahren zur kontinuierlichen Überwachung der aufgetragenen Pulvermenge auf der Schweissnaht (19) von widerstandsgeschweissten Dosenrümpfen (5), dadurch gekennzeichnet, dass ein Lichtstrahl (39) von ausserhalb der Dosenrümpfe (5) in einem von 90° abweichenden Winkel (alpha) zwischen zwei sich in einem gegenseitigen Abstand folgenden Dosenrümpfen (5) hindurch auf den mit Pulver beschichteten Schweiss-Nahtbereich (19) im Inneren des Dosenrumpfes (5) gerichtet und die von dort reflektierte Lichtmenge als Referenzgrösse erfasst, in einem Rechner (35) mit einem Sollwert verglichen und als weiterverarbeitbares Signal dargestellt wird.

2. Verfahren nach Anspruch 1, dadurch gekennzeichnet, dass die in spitzem Winkel vom Nahtbereich (19) in den Bereich der Lichtquelle (37) reflektierte Lichtmenge von einem Lichtsensor (23) gemessen und der gemessene Wert an den Rechner (35) weitergeleitet wird.

3. Verfahren nach einem der Ansprüche 1 oder 2, dadurch gekennzeichnet, dass die erfassten und/oder ausgewerteten reflektierten Lichtstrahlen zum Anzeigen einer ungenügenden Pulverschicht als akustisches oder optisches Signal oder zum Auswerfen der mangelhaft beschichteten Dosenrümpfe (5) umgesetzt werden.

4. Verfahren nach einem der Ansprüche 1 oder 2, dadurch gekennzeichnet, dass die erfassten und/oder ausgewerteten reflektierten Lichtstrahlen zur Regelung der Pulvermenge umsetzt werden.

5. Verfahren nach einem der Ansprüche 1 bis 4, dadurch gekennzeichnet, dass der Lichtstrahl (39) kontinuierlich ausgesendet wird und dessen Reflektion nur während des Eintritts des Lichtstrahls (39) ins Innere des Dosenrumpfs (5) ausgewertet wird.

6. Verfahren nach einem der Anspruche 1 bis 4, dadurch gekennzeichnet, dass der Lichtstrahl (39) nur ausgesendet und dessen Reflektion ausgewertet wird, wenn der Lichtstrahl (39) ins Innere des Dosenrumpfs (5) gelangt und an der beschichteten Schweissnaht (19) reflektiert wird.

7. Verfahren nach einem der Ansprüche 1 bis 6, dadurch gekennzeichnet, dass der Lichtstrahl (39) zwischen der Vorderkante (33) und der Hinterkante (41) zweier sich in einem Abstand von 10mm bis 25mm folgenden Dosenrümpfen (5) hindurch in Innere der Dosenrümpf (5) gerichtet wird.

8. Vorrichtung zur Durchführung des Verfahrens nach Anspruch 1, umfassend eine Lichtquelle (39) zur Erzeugung eines gebündelten Lichtstrahls (33), mindestens einen Lichtsensor (23) zum Erfassen von reflektiertem Licht, welches an der mit Pulver beschichteten Schweissnaht im Innern eines Dosenrumpfes (5) reflektiert wird und einen Rechner (35) zur Auswertung der an der Pulverschicht auf dem Schweissnahtbereich (19) reflektierten Lichtstrahlen.

9. Vorrichtung nach Anspruch 8, dadurch gekennzeichnet, dass zusätzlich ein Sensor (31) zum Erfassen der Anwesenheit eines Dosenrumpfes (5) vorgesehen ist.

10. Vorrichtung nach einem der Ansprüche 8 und 9, dadurch gekennzeichnet, dass die Lichtquelle (37) einen Laser umfasst.

11. Vorrichtung nach einem der Ansprüche 8 bis 10, dadurch gekennzeichnet, dass die Lichtquelle (37) und der Lichtsensor (23) auf einem Support ausserhalb der Dosenrümpfe (5) angeordnet und deren Energieversorgung und die Datenübermittlung durch ausserhalb der Dosenrümpfe (5) liegende Leitung an den Rechner (35) übermittelt werden.
